# EUROPÄISCHE PATENTSCHRIFT

(11) **EP 1 126 036 B1**
(45) Veröffentlichungstag und Bekanntmachung des Hinweises auf die Patenterteilung: **24.12.2008**
(21) Anmeldenummer: 01103404.8
(22) Anmeldetag: 14.02.2001
(51) Int. Cl.: C21B 7/24, C21C 5/46, G01N 1/12

(54) **Probennehmer für Schmelzen**
Sampling probe for melts
Sonde d'échantillonnage pour bains de fusion

(30) Priorität: 18.02.2000 DE 10007494; 28.09.2000 DE 10049253
(43) Veröffentlichungstag der Anmeldung: 22.08.2001
(73) Patentinhaber: Heraeus Electro-Nite International N.V., 3530 Houthalen (BE)
(72) Erfinder: Cappa, Guido, 3530 Houthalen (BE); Knevels, Johan, 3690 Bree (BE); Neyens, Guido, 3680 Opoeteren (BE)
(74) Vertreter: Kühn, Hans-Christian

(56) Entgegenhaltungen:
- EP-A- 0 447 613
- DE-A- 19 752 743
- US-A- 4 503 716
- US-A- 5 151 243
- US-A- 5 537 881
- DATABASE WPI Section Ch, Week 197908 Derwent Publications Ltd., London, GB; Class J04, AN 1979-15412B XP002169207 & SU 601 595 A (CONS MATLS STRUCT), 5. April 1978 (1978-04-05)
- PATENT ABSTRACTS OF JAPAN vol. 011, no. 129 (P-570), 23. April 1987 (1987-04-23) & JP 61 271452 A (KAWASOU DENKI KOGYO KK), 1. Dezember 1986 (1986-12-01)

## Beschreibung

Die Erfindung betrifft einen Probennehmer für Schmelzen, insbesondere für auf einer Metallschmelze aufliegende Schlacke mit einem an einem Halter angeordneten, ein- oder mehrteiligen Körper, der einen Einlauf und eine Probenkammer aufweist.

Derartige Probennehmer sind beispielsweise aus JP 61-271452 oder aus DE 197 52 743 A1 bekannt. Diese Schlackenprobennehmer nutzen die gegenüber einer Stahl- oder Eisenschmelze geringere Dichte der Schlacke aus, um saubere Proben zu erhalten. Beim Aufsteigen der Schlacke durch den Einlauf in die Probenkammer kann es zu einem Anhaften der Schlacke an den Probenkammerwänden führen mit der Folge, daß der Einlauf der Schlacke in die Probenkammer gestört oder in extremen Fällen sogar verhindert wird.

Der Erfindung liegt ausgehend vom Stand der Technik die Aufgabe zugrunde, die bekannten Probennehmer zu verbessern und eine hochwertige Probennahme zu ermöglichen.

Die Aufgabe wird für einen eingangs charakterisierten Probennehmer durch die Merkmale des Anspruchs 1 gelöst.

Durch das schlackeabweisende Material der Oberfläche des Einlaufs wird ein Anhaften der Schlacke in dem Einlauf und im Extremfall ein Verstopfen des Einlaufs mit Schlacke verhindert. Insbesondere geeignet sind Oberflächen, die Kohlenstoff oder Graphit aufweisen, wobei das Graphit oder der Kohlenstoff vorzugsweise gleichmäßig über die gesamte Oberfläche verteilt ist.

Zweckmäßig ist es, die Oberfläche als Graphitschicht auszubilden oder aus Pappe oder Papier zu bilden. Auch andere Materialien wie Öl oder Kalkmilch können geeignet sein. Vorteilhaft ist es weiterhin, dass eine (gegebenenfalls zusätzliche) Beschichtung aus Teflon auf die Oberfläche aufgebracht ist

Insbesondere kann der den Einlauf aufweisende Teil des Körpers ganz oder teilweise aus dem Schlacke abweisenden Material gebildet sein.

Gemäß der Erfindung ist der Einlauf kegelförmig ausgebildet, wobei das Ende mit dem geringeren Querschnitt an der Probenkammer angeordnet ist. Vorzugsweise ist der Einlauf in Eintauchrichtung zumindest teilweise unterhalb der Probenkammer angeordnet Nach der Erfindung ist die Probenkammer zylindrisch ausgebildet und es weist die Grundfläche der Probenkammer einen kreisförmigen Querschnitt auf, dessen Durchmesser größer ist als die Dicke der Probenkammer. Der Einlauf mündet zentrisch in die Grundfläche der Probenkammer, die wenigstens eine ringförmige seitliche Metallwand aufweist. Insbesondere weist die Probenkammer allseitig Metallwände auf.

Dabei ist es vorteilhaft, daß die Öffnung in der Probenkammer bzw. in der Metallwand der Probenkammer, durch die die Schlacke in die Probenkammer einläuft, die gleiche Größe und Form aufweist wie das Ende des kegelförmigen Einlaufs, so daß eine Stufenbildung an der Öffnung der Probenkammer vermieden wird. Die Öffnung/Mündung des Einlaufs in die Probenkammer weist vorzugsweise einen Durchmesser von 3 bis 7 mm, insbesondere von 5 mm auf, um einen optimalen Einlauf der Schlacke in die Probenkammer zu gewährleisten und um beim Anheben des Probennehmers nach der Probennahme ein Herausfließen von Schlacke aus der Probenkammer zu verhindern. Die ringförmige seitliche Metallwand ist dünner ausgebildet als die Metallwände der Grundflächen der Probenkammer.

Als zweckmäßig hat es sich erwiesen, dass die ringförmige seitliche Metallwand an ihrer der Mündung des Einlaufes abgewandten Grundfläche Ausnehmungen aufweist. Diese Ausnehmungen können in unterschiedlicher Form, beispielsweise sägezahnförmig, dreieckig oder abgerundet ausgebildet sein. Sie ermöglichen einen Gasdurchtritt, das heißt, einen Gasauslaß aus der Probenkammer, um der einfließenden Metallschmelze Platz zu machen. Die seitliche Metallwand liegt an einer Grundfläche der Probenkammer an, so dass die Gase zwischen der Stirnseite und der seitlichen Metallwand durch die Ausnehmungen aus der Probenkammer austreten können. Dazu ist es vorteilhaft, dass die Ausnehmungen gleichmäßig über die Stirnseite verteilt sind. An der der Mündung des Einlaufes in die Probenkammer angewandten Stirnseite der seitlichen Metallwand kann ein an der entsprechenden Grundfläche der Probenkammer angeordneter Deckel anliegen, der vorteilhafter Weise aus Metall gebildet ist.

Es ist von besonderem Vorteil, dass der Deckel einen umlaufenden, zur seitlichen Metallwand hin abgewinkelten Rand aufweist, der auf der seitlichen Metallwand aufliegt. Dadurch bildet der Deckel eine Art Hohlraum, so dass die sich in der Probenkammer bildende Probe nach der Entnahme aus dem Probennehmer über die Stirnseite der seitlichen Metallwand übersteht. Diese Wand kann dann, da sie durch die Grundfläche bzw. den Deckel eben ausgebildet ist, als Analysefläche Benutzt werden. Das Fehlen eines solchen Überstandes kann dazu führen, dass diese Analysefläche beispielsweise durch Schrumpfung sich ins Innere der Probenkammer zurückzieht, so dass ein Messkopf einer Mess- oder Analyseeinrichtung nicht auf der Probe selbst sondern auf der seitlichen Metallwand aufliegt, so dass eine korrekte Messung nicht durchgeführt werden kann. Der Rand ragt bevorzugt 0,5 bis 2 mm aus der Deckelfläche heraus.

Für eine leichte Probenentnahme ist es vorteilhaft, dass der Körper an seiner Außenseite eine umlaufende Kerbe oder Nut aufweist, die in ihrer Tiefe vorzugsweise spitz zuläuft. Dadurch wird eine Art Sollbruchstelle geschaffen, an der der Körper nach der Probennahme zerstört werden kann, so dass eine leichte Probenentnahme möglich ist. Dazu ist es insbesondere zweckmäßig, dass die Kerbe um die Probenkammer herumlaufend oder um den Einlauf, insbesondere um die Mündung des Einlaufs in die Probenkammer herumlaufend angeordnet ist.

Nachfolgend wird ein Ausführungsbeispiel der Erfindung anhand einer Zeichnung näher erläutert. Die Zeichnung zeigt
Fig. 1 einen erfindungsgemäßen Probennehmer,
Fig. 2 eine weitere Ausführungsform,
Fig. 3 eine Ausbildung der seitlichen Metallwand und
Fig. 4 eine Ausbildung des Deckels.

In einem feuerfesten Körper 1, beispielsweise aus Gießereisand, der am Ende eines Papprohres 2 als Träger gehaltert ist, ist eine Probenkammer 3 angeordnet. Die Probenkammer 3 ist etwa axialsymmetrisch in dem feuerfesten Körper 1 angeordnet. Sie ist im wesentlichen zylindrisch ausgebildet, wobei die Höhe des Zylinders wesentlich geringer ist als dessen Durchmesser. Die Wände der Probenkammer 3 sind mit Metall ausgekleidet. Dabei sind die Metallwände der Grundflächen 4;4' (Stahlplatten) dicker als die ringförmige seitliche Metallwand 5 als Mantelfläche aus Stahl. Diese ist etwa halb so dick wie die Metallwände der Grundflächen 4;4'.

Die dem Eintauchende zugewandte Grundfläche 4 der Probenkammer 3 weist eine Öffnung 6 mit einem Durchmesser von etwa 5 mm auf, die zentrisch angeordnet ist und an die der Einlauf 7 stufenlos mit dem gleichen Durchmesser anschließt. Der Einlauf 7 ist kegelförmig ausgebildet, seine Wände sind mit einer Beschichtung 8 aus Graphit ausgekleidet.

Beim Eintauchen des Probennehmers in die Schlackeschicht gelangt zunächst Schlacke in den Einlauf 7. Durch den kegelförmigen Verlauf wird gesichert, daß nur Schlacke in die gegenüber dem Volumen des Einlaufs 7 wesentlich geringervolumige Probenkammer 3 (höchstens etwa 30 bis 50%) gelangt. Die auf der Schmelze aufliegende Schlacke wird großflächig erfasst, so dass auch bei einer geringen Dicke der Schlackeschicht ausreichend Schlacke zur Füllung der Probenkammer mit Schlacke aufgenommen wird. Die Kegelform sichert eine gleichmäßige und kontinuierliche Einengung des Einlaufs 7, wobei durch die Beschichtung 8 ein Anhaften der Schlacke an der Wand verhindert wird. Die mit der erfindungsgemäßen Einrichtung erhaltenen Proben sind einer Analyse unmittelbar zugänglich.

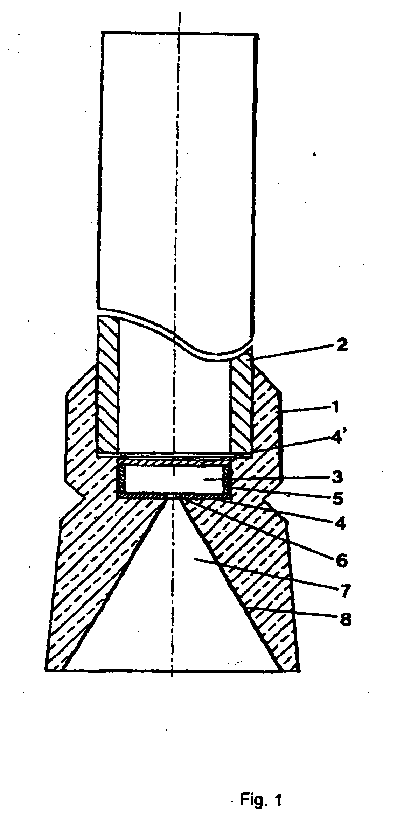

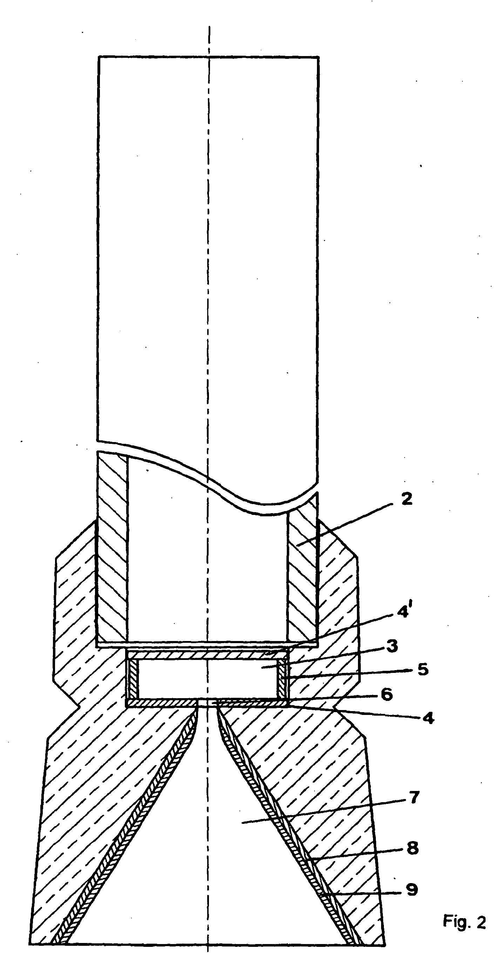

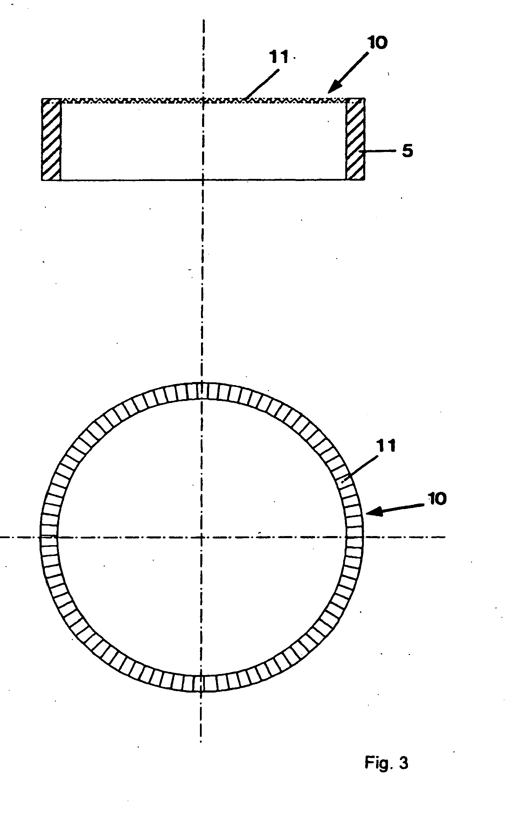

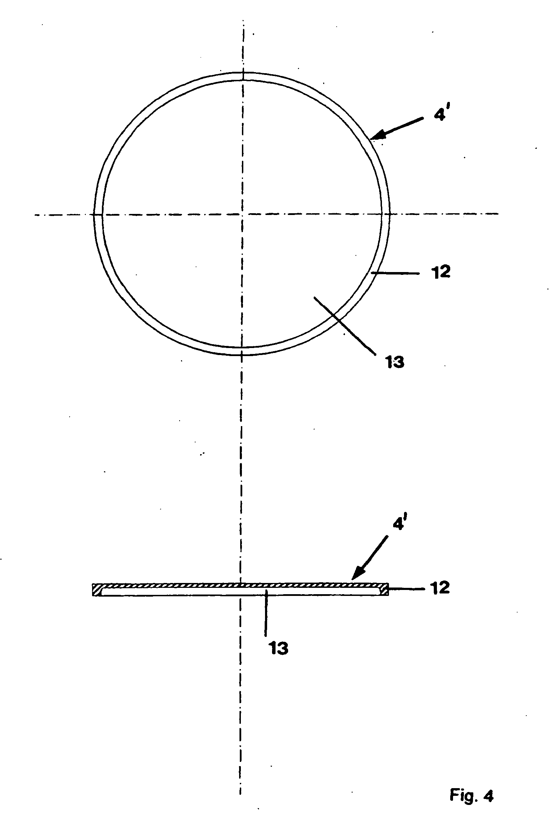

Fig. 2 zeigt einen Probennehmer ähnlich Fig. 1, wobei zusätzlich eine Teflonschicht 9 auf die Beschichtung 8 aufgebracht ist. In Fig. 3 ist die seitliche Metallwand 5 dargestellt, deren Stirnseite 10 umlaufende und aneinander gereihte Kerben aufweist, die die Form von Dreiecken haben. Fig. 4 zeigt eine als Deckel ausgebildete Grundfläche 4', die einen Rand 12 aufweist.

Der Rand 12 ist zur Anlage an die Stirnfläche 10 der Metallwand 5 bestimmt. Der Rand ragt etwa 1 mm aus der Deckelfläche 13 heraus.

## Patentansprüche

1. Probennehmer für Schmelzen, insbesondere für auf einer Metallschmelze aufliegende Schlacke, mit einem an einem Träger angeordneten, ein- oder mehrteiligen Körper, der einen Einlauf und eine Probenkammer aufweist, wobei der Einlauf (7) kegelförmig ausgebildet ist und das Ende mit dem geringeren Querschnitt an der Probenkammer (3) angeordnet ist, wobei die Probenkammer (3) zylindrisch ausgebildet ist, ihre Grundflächen (4;4') einen kreisförmigen Querschnitt aufweisen, dessen Durchmesser größer ist als die Dicke der Probenkammer (3), der Einlauf (7) zentrisch in die Grundfläche (4) der Probenkammer (3) mündet und die Probenkammer (3) wenigstens eine ringförmige seitliche Metallwand (5) aufweist, **dadurch gekennzeichnet, dass** der Einlauf (7) eine Oberfläche aufweist, die zumindest teilweise aus einem schlackeabwelsenden Material gebildet ist, dass die Probenkammer (3) allseitig Metallwände aufweist und dass die ringförmige seitliche Metallwand (5) dünner ist als die Metallwände der Grundflächen (4;4') der Probenkammer (3).

2. Probennehmer nach Anspruch 1, **dadurch gekennzeichnet, dass** die Oberfläche Kohlenstoff, insbesondere Graphit, aufweist.

3. Probennehmer nach Anspruch 2, **dadurch gekennzeichnet, dass** die Oberfläche als Graphitschicht ausgebildet oder aus Pappe oder Papier gebildet ist.

4. Probennehmer nach mindestens einem der Anspruche 1 bis 3, **dadurch gekennzeichnet, dass** die Oberfläche eine Beschichtung aus Teflon aufweist.

5. Probennehmer nach mindestens einem der Ansprüche 1 bis 4, **dadurch gekennzeichnet, dass** der den Einlauf aufweisende Teil des Körpers (1) mindestens teilweise aus dem schlackeabweisenden Material gebildet ist.

6. Probennehmer nach mindestens einem der Ansprüche 1 bis 5, **dadurch gekennzeichnet, dass** der Einlauf (7) in Eintauchrichtung zumindest teilweise unterhalb der Probenkammer (3) angeordnet ist.

7. Probennehmer nach mindestens einem der Ansprüche 1 bis 6, **dadurch gekennzeichnet, dass** die ringförmige seitliche Metallwand (5) an ihrer der Mündung des Einlaufes (7) abgewandten Stirnseite Ausnehmungen aufweist.

8. Probennehmer nach Anspruch 7, **dadurch gekennzeichnet, dass** die Ausnehmungen gleichmäßig über die Stirnseite verteilt sind.

9. Probennehmer nach mindestens einem der Ansprüche 1 bis 8, **dadurch gekennzeichnet, dass** an der der Mündung des Einlaufes (7) abgewandten Stirnseite ein Deckel anliegt.

10. Probennehmer nach Anspruch 9, **dadurch gekennzeichnet, dass** der Deckel aus Metall gebildet ist.

11. Probennehmer nach Anspruch 9 oder 10, **dadurch gekennzeichnet, dass** der Deckel einen umlaufenden, zur seitlichen Metallwand (5) hin abgewinkelten Rand aufweist, der an der seitlichen Metallwand (5) anliegt.

12. Probennehmer nach Anspruch 11, **dadurch gekennzeichnet, dass** der Rand 0,5 bis 2 mm Über die Deckelfläche hinausragt

13. Probennehmer nach mindestens einem der Ansprüche 1 bis 12, **dadurch gekennzeichnet, dass** der Körper an seiner Außenseite eine umlaufende Kerbe aufweist.

14. Probennehmer nach Anspruch 13, **dadurch gekennzeichnet, dass** die Kerbe um die Probenkammer (3) herum verlaufend angeordnet ist.

15. Probennehmer nach Anspruch 13, **dadurch gekennzeichnet, dass** die Kerbe um den Einlauf (7), insbesondere um die Mündung des Einlaufs (7) in die Probenkammer (3) herum verlaufend angeordnet ist.

16. Probennehmer nach mindestens einem der Ansprüche 1 bis 15, **dadurch gekennzeichnet, dass** der Durchmesser der Mündung des Einlaufes (7) in die Probenkammer (3) 3 bis 7 mm, insbesondere 5 mm, beträgt.

## Claims

1. A sampling apparatus for melts, in particular for slag resting on metal melt, having a single-part or multi-part body which is arranged on a carrier and comprises an inlet and a sample chamber, wherein the inlet (7) has a conical shape and the end which is smaller in cross-section is arranged at the sample chamber (3), wherein the sample chamber (3) has a cylindrical shape, its base areas (4; 4') comprise a circular cross-section having a diameter in excess of the thickness of the sample chamber (3), the inlet (7) ends centrally in the base area (4) of the sample chamber (3), and the sample chamber (3) comprises at least one annular lateral metal wall (5), **characterised in that** the inlet (7) comprises a surface which is, at least in part, formed from a slag-repellent material, that the sample chamber (3) comprises metal walls on all sides, and that the annular lateral metal wall (5) is thinner than the metal walls of the base areas (4; 4') of the sample chamber (3).

2. The sampling apparatus according to Claim 1, **characterised in that** the surface comprises carbon, in particular graphite.

3. The sampling apparatus according to Claim 2, **characterised in that** the surface is designed as a graphite layer or is formed from cardboard or paper.

4. The sampling apparatus according to at least anyone of Claims 1 to 3, **characterised in that** the surface comprises a Teflon coating.

5. The sampling apparatus according to at least anyone,of Claims 1 to 4, **characterised in that** the part of the body (1) that comprises the inlet is, at least in part, formed from the slag-repellent material.

6. The sampling apparatus according to at least anyone of Claims 1 to 5, **characterised in that** the inlet (7) is, at least in part, arranged below the sample chamber (3), as seen in the direction of immersion.

7. The sampling apparatus according to at least anyone of Claims 1 to 6, **characterised in that** the annular lateral metal wall (5) comprises recesses on its end face facing away from the orifice of the inlet (7).

8. The sampling apparatus according to Claim 7, **characterised in that** the recesses are uniformly distributed over the end face.

9. The sampling apparatus according to at least anyone of Claims 1 to 8, **characterised in that** a cover bears against the end face facing away from the orifice of the inlet (7).

10. The sampling apparatus according to Claim 9, **characterised in that** the cover is formed from metal.

11. The sampling apparatus according to Claim 9 or 10, **characterised in that** the cover comprises a circumferential edge which is bent in the direction of the lateral metal wall (5) and bears against the lateral metal wall (5).

12. The sampling apparatus according to Claim 11, **characterised in that** the edge projects beyond the surface of the cover by 0.5 to 2 mm.

13. The sampling apparatus according to at least anyone of Claims 1 to 12, **characterised in that** the body comprises a circumferential notch on its outside.

14. The sampling apparatus according to Claim 13, **characterised in that** the notch is arranged such that it extends around the sample chamber (3).

15. The sampling apparatus according to Claim 13, **characterised in that** the notch is arranged such that it extends around the inlet (7), in particular around the orifice of the inlet (7) into the sample chamber (3).

16. The sampling apparatus according to at least anyone of Claims 1 to 15, **characterised in that** the diameter of the orifice of the inlet (7) into the sample chamber (3) is 3 to 7 mm, in particular 5 mm.

## Revendications

1. Sonde de prélèvement d'échantillons ou sonde d'échantillonnage pour bains de fusion, notamment pour un laitier surnageant sur un bain de métal en fusion, comprenant un corps en une ou plusieurs parties agencé sur un support et présentant une entrée d'écoulement et une chambre d'échantillon, l'entrée d'écoulement (7) étant d'une configuration de forme conique et l'extrémité de section transversale la plus petite étant agencée au niveau de la chambre d'échantillon (3), la chambre d'échantillon (3) étant d'une configuration cylindrique, ses surfaces de base (4, 4') présentant une section transversale de forme circulaire dont le diamètre est supérieur à l'épaisseur de la chambre d'échantillon (3), l'entrée d'écoulement (7) débouchant de manière centrale dans la surface de base (4) de la chambre d'échantillon (3), et la chambre d'échantillon (3) présentant au moins une paroi métallique (5) latérale de forme annulaire, **caractérisée en ce que** l'entrée d'écoulement (7) présente une surface qui est réalisée au moins en partie en un matériau repoussant le laitier, **en ce que** la chambre d'échantillon (3) présente de tous les côtés des parois métalliques, et **en ce que** la paroi métallique latérale (5) de forme annulaire est plus mince que les parois métalliques des surface de base (4, 4') de la chambre d'échantillon (3).

2. Sonde d'échantillonnage selon la revendication 1, **caractérisée en ce que** la surface présente du carbone, notamment du graphite.

3. Sonde d'échantillonnage selon la revendication 2, **caractérisée en ce que** la surface est réalisée sous forme de couche de graphite ou bien est formée de carton ou de papier.

4. Sonde d'échantillonnage selon l'une au moins des revendications 1 à 3, **caractérisée en ce que** la surface présente un revêtement de «Téflon».

5. Sonde d'échantillonnage selon l'une au moins des revendications 1 à 4, **caractérisée en ce que** la partie du corps (1) comprenant l'entrée d'écoulement est formée au moins partiellement par le matériau repoussant le laitier.

6. Sonde d'échantillonnage selon l'une au moins des revendications 1 à 5, **caractérisée en ce que** l'entrée d'écoulement (7) est agencée, en se référant à la direction d'immersion, au moins en partie sous la chambre d'échantillon (3).

7. Sonde d'échantillonnage selon l'une au moins des revendications 1 à 6, **caractérisée en ce que** la paroi métallique (5) latérale de forme annulaire présente des évidements sur son côté frontal éloigné de l'embouchure de l'entrée d'écoulement (7).

8. Sonde d'échantillonnage selon la revendication 7, **caractérisée en ce que** les évidements sont répartis de manière uniforme sur le côté frontal.

9. Sonde d'échantillonnage selon l'une au moins des revendications 1 à 8, **caractérisée en ce que** sur le côté frontal éloigné de l'embouchure de l'entrée d'écoulement (7), s'appuie un couvercle.

10. Sonde d'échantillonnage selon la revendication 9, **caractérisée en ce que** le couvercle est réalisé en métal.

11. Sonde d'échantillonnage selon la revendication 9 ou 10, **caractérisée en ce que** le couvercle présente un bord périphérique coudé en direction de la paroi métallique (5) latérale et s'appuyant sur la paroi métallique (5) latérale.

12. Sonde d'échantillonnage selon la revendication 11, **caractérisée en ce que** le bord dépasse au-delà de la surface de couvercle de 0,5 à 2 mm.

13. Sonde d'échantillonnage selon l'une au moins des revendications 1 à 12, **caractérisée en ce que** le corps présente sur son côté extérieur, une entaille périphérique.

14. Sonde d'échantillonnage selon la revendication 13, **caractérisée en ce que** l'entaille est agencée de manière à s'étendre autour de la chambre d'échantillon (3).

15. Sonde d'échantillonnage selon la revendication 13, **caractérisée en ce que** l'entaille est agencée de manière à s'étendre autour de l'entrée d'écoulement (7), notamment autour de l'embouchure de l'entrée d'écoulement (7) dans la chambre d'échantillon (3).

16. Sonde d'échantillonnage selon l'une au moins des revendications 1 à 15, **caractérisée en ce que** le diamètre de l'embouchure de l'entrée d'écoulement (7) dans la chambre d'échantillon (3) vaut de 3 à 7 mm, plus particulièrement 5 mm.
